(19) Europäisches Patentamt / European Patent Office / Office européen des brevets

(11) **EP 4 694 073 A1**

(12) **EUROPEAN PATENT APPLICATION**
published in accordance with Art. 153(4) EPC

(43) Date of publication:
**11.02.2026 Bulletin 2026/07**

(21) Application number: **23933914.6**

(22) Date of filing: **26.12.2023**

(51) International Patent Classification (IPC):
**H04L 45/12** (2022.01)

(52) Cooperative Patent Classification (CPC):
**H04L 45/12; H04L 45/121; H04L 47/12; H04L 47/72**

(86) International application number:
**PCT/CN2023/142041**

(87) International publication number:
**WO 2024/217051 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.04.2023 CN 202310463598**

(71) Applicant: **ZTE Corporation
Shenzhen, Guangdong Province 518057 (CN)**

(72) Inventors:
• **CHEN, Xiao
Shenzhen, Guangdong 518057 (CN)**
• **PENG, Shaofu
Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **SERVICE FLOW PATH DETERMINATION METHOD AND ELECTRONIC DEVICE**

(57) Disclosed in the present application are a service flow path determination method and an electronic device, belonging to the technical field of data communications. The method includes: acquiring a delay demand quantity of a target service flow and time slot resource information of each egress port of each node; on the basis of the time slot resource information of each egress port of each node, determining at least one candidate path corresponding to the target service flow; on egress ports of candidate nodes in each candidate path, reserving a time slot resource for the target service flow, and determining an evaluated value of the total residence delay of the target service flow on the candidate path; and selecting a candidate path satisfying a first condition as a target path for the target service flow.

100

FIG. 1

## Description

### CROSS-REFERENCE TO RELATED APPLICATIONS

The present application claims the priority of the Chinese patent application No. 202310463598.7 filed to the China Patent Office on April 20, 2023, and entitled "SERVICE FLOW PATH DETERMINATION METHOD AND ELECTRONIC DEVICE", of which the entire contents are incorporated herein by reference.

### TECHNICAL FIELD

Embodiments of the present application relate to the technical field of data communications, in particular to a service flow path determination method and an electronic device.

### BACKGROUND

The standard RFC8655 published by IETF describes the architecture of deterministic networks and defines the quality of service (QoS) objectives for deterministic forwarding: minimum and maximum delay from a source to a destination, and bounded delay jitter; an allowable packet loss rate; and an upper bound of unordered packet transmission. To achieve these objectives, the deterministic networks adopt measures such as resource reservation, explicit routing, and service protection. Resource reservation refers to occupation, exclusive occupation or sharing in a certain proportion of resources by service traffics, such as physical links, link bandwidths, and queue resources.

In order to meet the deterministic QoS requirements mentioned above, an individual draft draft-peng-detnet-packet-timeslot-mechanism-01 published by the IETF describes a scheduling mechanism for packet timeslots. That is, timeslots are converted into resources, and are opened and reserved for services. However, different service flows have different delay demand quantity and correspond to different traffic information such as burst volumes, which poses certain difficulties in reserving timeslot resources. When a plurality of service flows arrive at an end node simultaneously, network congestion is prone to occurring, which affects the throughput of an entire communication network.

### SUMMARY

Embodiments of the present application provide a service flow path determination method and an electronic device, so as to at least solve the problem that network congestion is prone to occurring when a plurality of service flows arrive at an end node simultaneously in the related art.

In order to solve the above technical problems, the present application is implemented as follows.

In a first aspect, an embodiment of the present application provides a service flow path determination method, including: acquiring a delay demand quantity of a target service flow and timeslot resource information of each egress port of each node; determining at least one candidate path corresponding to the target service flow on the basis of the timeslot resource information of each egress port of each node; reserving a timeslot resource for the target service flow on egress ports of candidate nodes in each candidate path, and determining an evaluated value of total residence delay of the target service flow on the candidate path; and selecting a candidate path satisfying a first condition as a target path for the target service flow, wherein the first condition includes that timeslot resource is successfully reserved for the target service flow on egress ports of all candidate nodes of a selected candidate path, and a sum of an evaluated value of total residence delay of the selected candidate path and an accumulated link propagation delay of the selected candidate path satisfies the delay demand quantity.

In a second aspect, an embodiment of the present application provides an electronic device, including a processor and a memory, wherein the memory stores at least one computer program, and the at least one computer program is loaded and executed by the processor to implement the above method.

In a third aspect, an embodiment of the present application provides a computer-readable storage medium, storing at least one computer program therein, wherein the computer program is loaded and executed by a processor to implement the above method.

According to the service flow path determination method provided by the embodiment of the present application, the delay demand quantity of the target service flow and the timeslot resource information of each egress port of each node are acquired; at least one candidate path corresponding to the target service flow is determined on the basis of the timeslot resource information of each egress port of each node; the timeslot resource is reserved for the target service flow on the egress ports of the candidate nodes in each candidate path, and the evaluated value of total residence delay of the target service flow on the candidate path is determined; and the candidate path satisfying the first condition is selected as the target path for the target service flow.

Thus, it can be seen that by using the method provided in the embodiment of the present application, when the target service flow arrives at an end node, the corresponding target path is selected according to the delay demand quantity of the target service flow and the timeslot resource information of each egress port of each node, which can reduce the possibility of network congestion. In addition, the timeslot resource is reserved on the egress ports of the candidate nodes in the candidate path, the evaluated value of total residence delay of the target service flow on the candidate path is determined, and then whether the target path meets the delay demand quantity of the target service flow is determined according to the evaluated value of total residence delay, which provides quantitative guidance for determining the target path that meets specific delay requirements in a network, and is conducive to quickly and accurately selecting the target path corresponding to the target service flow, thereby improving the throughput of the entire communication network.

It should be understood that the above general description and the following detailed description are merely exemplary and explanatory, and cannot limit the present application.

BRIEF DESCRIPTION OF DRAWING(S)

Accompanying drawings here, which are incorporated in and constitute a part of this specification, illustrate embodiments consistent with the present application and together with the specification, serve to explain the principles of the present application.

FIG. 1 shows a schematic flowchart of a service flow path determination method provided by embodiments of the present application.
FIG. 2 shows a schematic diagram of a timeslot resource model for a link provided by embodiments of the present application.
FIG. 3 shows an extended network protocol structure diagram provided by embodiments of the present application.
FIG. 4 shows a schematic diagram of various typical service traffic specifications and possible timeslot resource reservation results of service flows provided by embodiments of the present application.
FIG. 5 shows a schematic structural diagram of a model for a service reserved timeslot provided by embodiments of the present application.
FIG. 6 shows a schematic structural diagram of a network provided by embodiments of the present application.
FIG. 7 shows a schematic diagram of a timeslot mapping relationship between two adjacent upstream and downstream nodes provided by embodiments of the present application.
FIG. 8 shows a schematic diagram of an offset relationship between burst volumes (or sub burst volume) of a service and an orchestration period provided by embodiments of the present application.
FIG. 9 shows a schematic structural diagram of an electronic device provided by an embodiment of the present application.

DETAILED DESCRIPTION

Exemplary embodiments will be illustrated in detail here, examples of which are represented in accompanying drawings. In a case where the following descriptions refer to the accompanying drawings, the same number in the different accompanying drawings represents the same or similar elements unless otherwise indicated. The implementations described in the following exemplary embodiments do not represent all implementations consistent with the present application. On the contrary, they are merely examples of an apparatus and method consistent with some aspects of the present application as detailed in the appended claims.

For understanding the embodiments of the present application, the relevant terms are explained as follows.

Timeslot: a minimum unit of time-division multiplexing that needs to be designed with a reasonable value, such as 10 us, to be able to send at least one complete packet.

Timeslot scheduling: a scheduling behavior of sending a packet in a designated timeslot.

Incoming timeslot: for a certain intermediate node in a specific path, a timeslot contained in a packet received by the intermediate node from an upstream node (i.e., an outgoing timeslot of the upstream node) is incoming timeslot.

Outgoing timeslot: for a certain intermediate node in a specific path, when continuing to send a packet to a downstream node, the intermediate node selects to send the packet in a designated timeslot according to resource reservation or certain rules, and such timeslot is called the outgoing timeslot.

Ongoing sending timeslot: for a head node in a path, the head node continues to send a packet received from a client side to a downstream node; and a timeslot, in which the egress port is currently in a sending state at the moment when the packet arrives at an egress port, is the ongoing sending timeslot. For an intermediate node in the path, the intermediate node continues to send a packet received from an upstream node to the downstream node; and a timeslot, in which the egress port is currently in a sending state at the moment when the end of an incoming timeslot to which the packet belongs arrives at the egress port, is the ongoing sending timeslot. Please note that the ongoing sending timeslot is not an outgoing timeslot.

Scheduling period: a cyclic period of a time-division multiplexing scheduling mechanism implemented by a network node, including a fixed number of timeslots. For example, one scheduling period fixedly contains 100 timeslots.

Service burst interval: according to the traffic specification for a deterministic service flow generally a certain burst volume is generated within a cyclic burst interval (i.e., service burst interval). For example, if a certain service flow generates 1000 bits of traffic every 1 ms, the corresponding service burst interval is 1 ms.

Orchestration period: an orchestration period adopted by a control plane according to requirements of all deterministic services. Timeslot resources are allocated to services within the orchestration period, namely which timeslots in the orchestration period are occupied by the services and how many bits are occupied within the timeslots. The orchestration period is usually an integer multiple of a scheduling period, or equal to the scheduling period.

In the individual draft published by the IETF, it is mentioned that at an ingress node of a network, corresponding outgoing timeslot resources need to be reserved on an egress port for service flows with corresponding arrival moments; and at an intermediate node in the network, corresponding outgoing timeslot resources need to be reserved on an egress port for service flows with corresponding incoming timeslots. However, the draft does not provide a specific scheme for reserving timeslot resources, and the varying delay demand quantity of different deterministic service flows and differences in corresponding traffic information such as burst volumes pose certain difficulties in reserving timeslot resources.

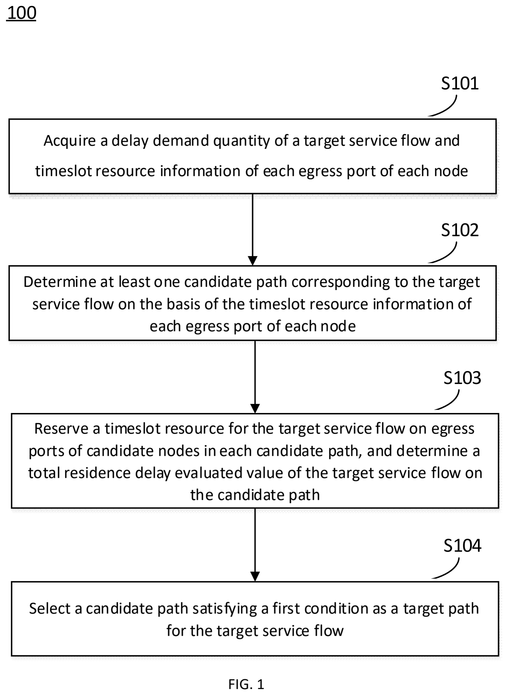

Therefore, an embodiment of the present application provides a service flow path determination method, and the method may be applied to a centralized controller or various nodes in a network. FIG. 1 shows a schematic flowchart of a service flow path determination method provided by an embodiment of the present application. As shown in the figure, the service flow path determination method 100 includes the following steps.

At S101, a delay demand quantity of a target service flow and timeslot resource information of each egress port of each node are acquired.

At S102, at least one candidate path corresponding to the target service flow is determined on the basis of the timeslot resource information of each egress port of each node.

At S103, a timeslot resource is reserved for the target service flow on egress ports of candidate nodes in each candidate path, and an evaluated value of total residence delay of the target service flow on the candidate path is determined.

S104, a candidate path satisfying a first condition is selected as a target path for the target service flow, wherein the first condition includes that timeslot resource is successfully reserved for the target service flow on egress ports of all candidate nodes of a selected candidate path, and a sum of an evaluated value of total residence delay of the selected candidate path and an accumulated link propagation delay of the selected candidate path satisfies the delay demand quantity.

Through the above steps, when the target service flow arrives, at least one candidate path corresponding to the target service flow is determined based on the timeslot resource information of each egress port of each node, and the timeslot resource is reserved for the target service flow on the egress ports of the candidate nodes in each candidate path, so as to select the target path that meets the delay demand quantity of the target service flow. This can reduce the possibility of network congestion, and in the process of reserving the timeslot resource, the evaluated value of total residence delay of the target service flow on the candidate path is determined, thereby providing a basis for calculating the target path that meets specific delay requirements in the network.

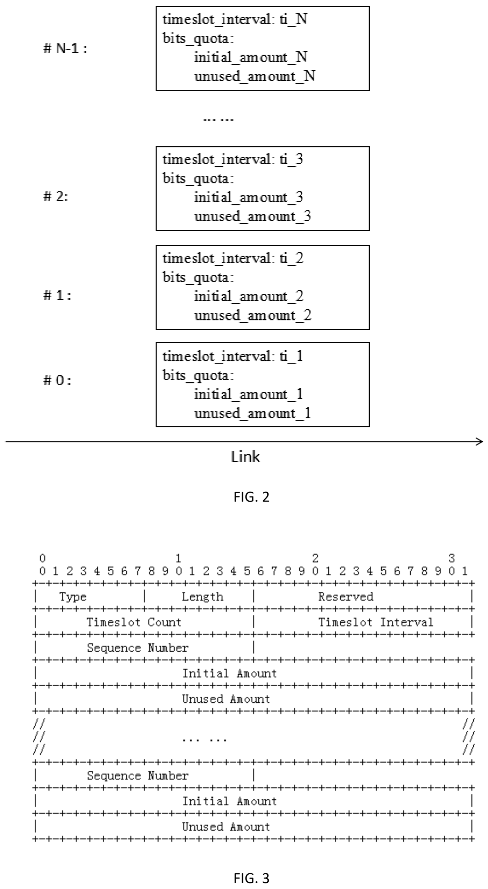

Illustration is made in conjunction with specific examples. Each node in the network may configure timeslot resource information for a transmission link thereof. The timeslot resource information of one link may be represented as the bit amount corresponding to all timeslots within one orchestration period. FIG. 2 shows a schematic diagram of a timeslot resource model for a link provided by embodiments of the present application. The orchestration period includes N timeslots with the sequence numbers from 0 to N-1, and forwarding resource information contained in each timeslot mainly includes the following attributes.

The sequence number sequence_number of a timeslot in the orchestration period: in the orchestration period containing N (note: N>0) timeslots, the number of the first timeslot is denoted as 0, and the number of the last timeslot is denoted as N-1.

A timeslot interval timeslot_interval: in units of us (other units such as ns and ms may also be used). Generally, the interval of each timeslot contained in the orchestration period is the same.

The bit quota bits_quota corresponding to a timeslot: in units of bit (other units such as byte and word may also be used). This quota may further include attributes such as an initial amount (initial_amount), an amount already used by a service (used_amount), and an unused (idle) amount (unused_amount). Since initial_amount = used_amount + unused_amount, only two of these attributes need to be included. For example, when the initial_amount in the bits_quota attribute is provided and t unused_amount attribute is additionally used to provide an idle value, it can be inferred that an initial idle value is equal to an initial value.

An initial value (initial_amount) of bits_quota is a configurable preset value that is related tothe total bandwidth of a link. If the total bandwidth of the link is denoted as C and the timeslot interval is denoted as ti, then the initial_amount should be set to a value not exceeding C*ti, which mainly considers the transmission needs of other non-deterministic service flows in the network. Generally, the initial_amount of each timeslot contained in the orchestration period is the same.

Due to the fact that nodes in the network may notify each other of the timeslot resource information of the link, or acquire the timeslot resource information of various links in the network by means of a centralized controller, when the target service flow arrives, at least one candidate path corresponding to the target service flow is determined based on the timeslot resource information of each egress port of each node, and the timeslot resource is reserved for the target service flow on the egress ports of the candidate nodes in each candidate path, so as to select the target path that meets the delay requirements of the target service flow.

In some cases, within a control plane, the centralized controller or a head node of the path, collectively referred to as a routing module, calculates an end-to-end target path for a deterministic service flow. Before determining the target path, the routing module may select some suitable candidate paths for the service flows in the network, and then select one of the candidate paths as the target path. The candidate paths for the target service flow may be acquired based on an identification of the target service flow or the demand quantity of the target service flow for link resources, bandwidths, etc. Alternatively, the candidate paths for the target service flow may be acquired based on head node information and tail node information corresponding to the target service flow.

Furthermore, after acquiring the candidate paths, the centralized controller reserves the timeslot resource uniformly, or each node in the candidate paths reserves the timeslot resource according to a distributed protocol (such as RSVP-TE), collectively referred to as a resource reservation module. The resource reservation module then reserves the timeslot resource in the idle bit quota of a corresponding timeslot of the link. If reservation fails, such as certain link in the candidate paths does not include sufficient idle bit quota of timeslots in a suitable position within the orchestration period, the selected candidate path does not meet the requirements and other candidate paths need to be tried. If no candidate path that meets the requirements can be found across the entire network, a calculation result fails.

When the timeslot resource is successfully reserved for the target service flow on the egress ports of all the candidate nodes of the candidate path and the candidate path takes effect as the target path, the idle timeslot resources of the links along the target path are changed, which will trigger re-notification of the timeslot resource information of these links in the network.

Acquiring the timeslot resource information of each egress port of each node includes that: timeslot resource information of one or more timeslots is notified to each egress port by extending a network protocol, wherein the timeslot resource information includes the sequence number of timeslot, the timeslot interval, initial resource information, occupied resource information, and idle resource information.

In applications, an interior gateway protocol (IGP) may be extended to support notification of delay resource information of the link in the network. For example, an intermediate system to intermediate system (ISIS) protocol or open shortest path first (OSPF) may be extended to notify the resource information of the one or more timeslots within the orchestration period of the link, including the sequence numbers of the timeslots, the timeslot interval (time unit), an initial bit amount of the timeslots, and an idle bit amount of the timeslots.

A border gateway protocol (BGP) may also be extended to support the notification of the delay resource information of the link in the network or between the network and the controller. That is, the resource information of the one or more timeslots within the orchestration period of the link is notified, including the sequence numbers of the timeslots, the timeslot interval (time unit), the initial bit amount of the timeslots, and the idle bit amount of the timeslots.

Taking extension of ISIS as an example, an existing ISIS protocol set (referring to RFC5305, RFC5311, RFC5316, and RFC5120) has defined TLVs 22/23/141/222/223 for notifying an adjacency relationship. According to the embodiments of the present application, a Sub-TLV, denoted as Timeslot Resource Sub-TLV, is newly added to these TLVs and used to carry the timeslot resources of the link. The structure diagram of the network protocol is shown in FIG. 3:

Type: occupies 1 byte, whose value is to be allocated by Internet assigned numbers authority (IANA) to represent that a TLV is Timeslot Resource Sub-TLV.
Length: occupies 1 byte and represents a content length of the TLV (excluding the fields Type and Length themselves).
Timeslot Count: occupies 2 bytes and represents the number of timeslots included in the orchestration period. These timeslots are numbered in sequence from 0 to N-1.
Timeslot Interval: occupies 2 bytes and represents a length of each timeslot, in units of microseconds (us).

The following fields are one or more <Sequence Number, Initial Amount, Unused Amount>groups, where each <Sequence Number, Initial Amount, Unused Amount> group represents the initial bit amount and the idle bit amount of the timeslot with the corresponding sequence number.

Sequence Number: occupies 2 bytes and represents the sequence number of the timeslot.
Initial Amount: occupies 4 bytes and represents the initial bit amount of the timeslot.
Unused Amount: occupies 4 bytes and represents the idle bit amount of the timeslot.

It should be noted that the above extension is only a specific way and is not necessarily limited to such protocol extension. For example, in other extension methods, counting may be done in units of byte or nanosecond (ns). It is even possible to design other TLVs that can also characterize the timeslot resource information, for example, a separate sub-TLV is defined for the <Sequence Number, Initial Amount, Unused Amount> above. OSPF or other similar protocols, as well as a BGP-LS protocol or other similar protocols may further be extended to collect the timeslot resource information of each egress port of each node from the network, which will not be repeated here.

The following will provide a detailed introduction to a process of reserving the timeslot resource for the target service flow on the egress ports of all the candidate nodes of the candidate path. The reservation process of the timeslot resource may be implemented uniformly by a centralized controller or by various nodes included in the candidate path according to a distributed protocol (such as RSVP-TE). It should be noted that in the embodiments of the present application, it is assumed that the timeslots reserved by the nodes for all the service flows within the orchestration period can be mapped to corresponding timeslots within the scheduling period without conflict.

In some possible implementations, in step S103, reserving the timeslot resource for the target service flow on the egress ports of the candidate nodes in each candidate path includes the following.

At step 1031a, an orchestration period is determined for candidate nodes in each candidate path.

In some cases, the orchestration period of candidate nodes in each candidate path may be determined in the following ways: preset service burst intervals corresponding to a plurality of service flows are acquired; and the orchestration period for candidate nodes in each candidate path is determined based on the least common multiple of the service burst intervals corresponding to the plurality of service flows.

Compared to manually selecting a preset number of timeslots as the orchestration period in the related art, the orchestration period determination method provided in the embodiment of the present application can be applied to timeslot resource reservation for various target service flows, thereby improving the real-time performance of timeslot resource reservation.

At step 1031b, a timeslot reserving subtask is determined based on the number of timeslots reserved for the target service flow in the orchestration period of the candidate nodes, wherein the traffic corresponding to each timeslot reserving subtask belongs to the target service flow.

Generally, deterministic service flows have specific traffic specifications, such as periodically generating a specific size of traffic within a specific length of service burst interval. These traffics arrive at a network ingress node (i.e. a head node of the path) in a regular manner, and the offset between the arrival moment of the traffic and the orchestration period of the network ingress node is fixed. Due to the different service burst intervals correspond to different target service flows, discrete burst volumes within each service burst interval also vary. Therefore, in the embodiment of the present application, the timeslot reserving subtask is determined based on the number of the timeslots reserved for the target service flow in the orchestration period of the candidate nodes.

In some possible implementations, the number of the timeslots reserved for the target service flow in the orchestration period is determined based on the first number of service burst intervals of the target service flow in the orchestration period and the second number of discrete burst volumes within each service burst interval; and the timeslot reserving subtask is determined based on the number of the timeslots reserved for the target service flow in the orchestration period.

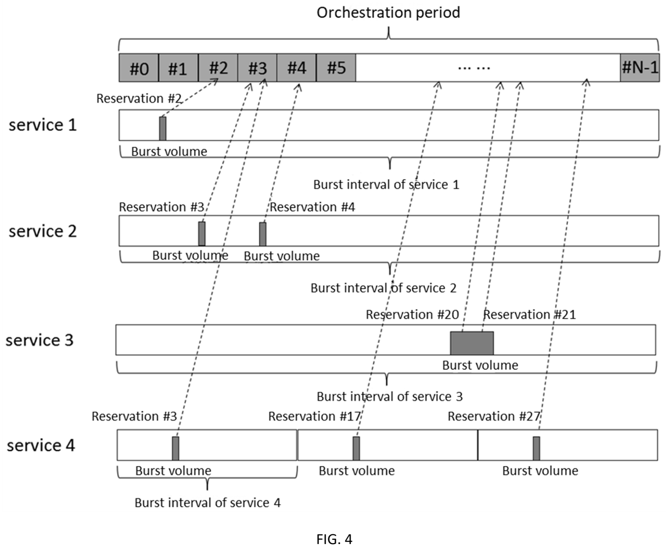

Illustration is made in conjunction with examples. FIG. 4 shows a schematic diagram of various typical service traffic specifications and possible timeslot resource reservation results for a service flow provided by embodiments of the present application. As shown in the figure, lengths of service burst intervals of deterministic service flows services 1, 2, and 3 are equal to the orchestration period. Service 1 generates a small single burst volume within its burst interval (note: "small" here is relative to the bit quota of the timeslot), and a timeslot 2 in the orchestration period may be reserved for service 1. Service 2 generates two small discrete burst volumes within its burst interval, and timeslot 3 and timeslot 4 in the orchestration period may be reserved for service 2. Since the length of a service burst interval of service 4 is only one-third of the orchestration period, then service 4' may be constructed first. The length of a service burst interval of service 4' is three times that of service 4, and then service 4' is similar to service 2, and generates three small discrete burst volumes within its burst interval, and timeslot 3, timeslot 17, and timeslot 27 in the orchestration period may be reserved for service 4.

Determining the number of timeslots reserved for the target service flow in the orchestration period based on the first number of service burst intervals of the target service flow in the orchestration period and the second number of discrete burst volumes within each service burst interval includes that: the third number of timeslots reserved for each discrete burst volume within the service burst interval in the orchestration period is determined based on timeslot resource information of egress ports of all the candidate nodes in the candidate path; and the number of the timeslots reserved for the target service flow in the orchestration period is determined based on the first number of service burst intervals of the target service flow in the orchestration period, the second number of discrete burst volumes within each service burst interval, and the third number of timeslots reserved for each discrete burst volume in the orchestration period.

Illustration is made in conjunction with examples. As shown in FIG. 4, service 3 generates a large single burst volume within its burst interval, and a plurality of timeslots, such as timeslot 20 and timeslot 21, in the orchestration period may be reserved for service 3. In some cases, determining the third number of timeslots reserved for each discrete burst volume within the service burst interval in the orchestration period based on the timeslot resource information of the egress ports of all the candidate nodes included in the candidate path includes that: initial resource information corresponding to a single timeslot of the candidate node in the orchestration period is determined based on the timeslot resource information of the egress ports of all the candidate nodes in the candidate path. In a case where the proportion of the discrete burst volumes within the service burst interval to the initial resource information corresponding to the single timeslot in the orchestration period is not higher than a preset value, it is determined that the discrete burst volume corresponds to one reserved timeslot. Or, in a case where the proportion of the discrete burst volumes within the service burst interval to the initial resource information corresponding to the single timeslot in the orchestration period is higher than the preset value, the discrete burst volume is split into a plurality of sub burst volumes according to a preset rule, each sub burst volume corresponding to one reserved timeslot, where according to the preset rule, each sub burst volume at least contains one complete packet, and the proportion of each sub burst volume to the initial resource information corresponding to the single timeslot in the orchestration period is not higher than the preset value.

Illustration is made in conjunction with examples. For each service, such as service_i, a head node H (or a centralized controller) determines the number of reserving subtasks required by the service according to the service burst interval, the service burst volume, the bandwidth of an egress port of the head node (link-a), the length of the orchestration period, and the timeslot interval. Here, one reserving subtask corresponds to one separate timeslot resource reservation request. As shown in FIG. 3, the number of reserving subtask required by service 1 is 1, the number of reserving subtasks required by service 2 is 2, the number of reserving subtask required by service 3 is 2, and the number of reserving subtasks required by service 4 is 3.

The above method for determining the timeslot reserving subtask may be summarized as follows:

a) The service burst interval is aligned with the orchestration period to ensure the lengths of the two are equal. For example, if the service burst interval of service 4 is only one-third of the orchestration period, then the service burst interval of service 4 is first tripled to obtain an expanded service burst interval, which is aligned with the orchestration period.

b) The number of discrete burst volumes that is generated by the service flow within the orchestration period is checked. For each burst volume, if the proportion of the magnitude of the burst volume to an initial bit amount (initial_amount) of a single timeslot does not exceed a specific value, then the burst volume corresponds to one reserved subtask; or if the proportion of the magnitude of the burst volume to the initial bit amount (initial_amount) of the single timeslot exceeds a specific value, the burst volume is split into a plurality of sub burst volumes (note that each sub burst volume contains a complete packet), so that the proportion of each sub burst volume to the initial bit amount (initial_amount) of the single timeslot does not exceed the specific value, and each sub burst volume corresponds to one reserved subtask.

At step 1031c, for each timeslot reserving subtask, the timeslot resource for the target service flow is reserved on the egress ports of candidate nodes.

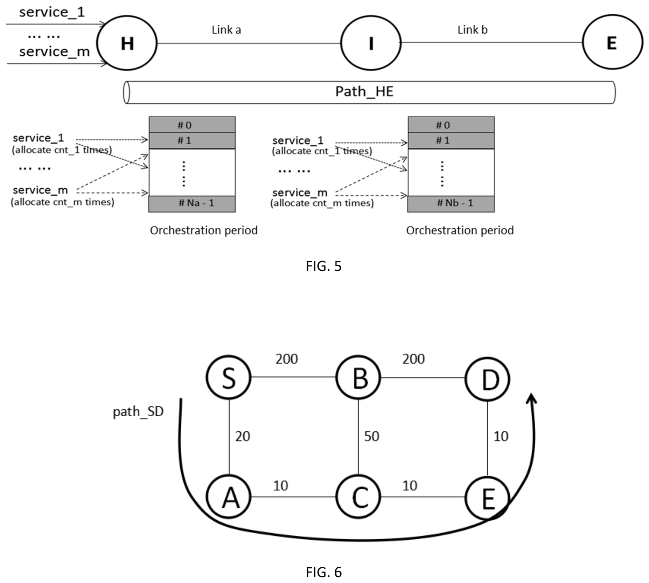

A path may carry a plurality of service flows, and each service flow requires a separate reserved timeslot resource. In particular, for a single service flow, a plurality of timeslots may need to be reserved within the orchestration period. Therefore, in the embodiment of the present application, timeslot resource for the target service flow is reserved on the egress ports of candidate nodes for each timeslot reserving subtask respectively. FIG. 5 shows a schematic structural diagram of a model for a service reservation timeslot provided by embodiments of the present application. As shown in the figure, assuming that a candidate path Path_HE from the head node H to a tail node E passes through one or more intermediate nodes I (note: for simplicity, only one intermediate node is depicted here) to provide bearer services for m service flows (service_1, ..., service_m), and within the orchestration period of each egress port along the path, the service flow service_i ($1 \leq i \leq m$) needs to trigger cnt_i times of timeslot resource reservation.

In some possible implementations, in step S103, reserving the timeslot resource for the target service flow on the egress ports of the candidate nodes in each candidate path, and determining the evaluated value of total residence delay of the target service flow on the candidate path include the following.

At step 1032a, a budget value of residence delay is determined for each candidate node in the candidate path based on the delay demand quantity and the accumulated link propagation delay of the candidate path.

Illustration is made in conjunction with specific examples. FIG. 6 shows a schematic structural diagram of a network provided by embodiments of the present application. As shown in the figure, the network includes six nodes: node S, node A, node C, node E, node D, and node B. A link between every two of the nodes is a bidirectional link. Propagation delay parameters of each link are marked in the figure. For example, a propagation delay of the link between node S and node A is 20 us. Assuming that an end-to-end delay required by the target service flow is 200 us, which is the same for reserving subtasks corresponding to all the burst volumes of the target service flow. The centralized controller or the head node S first determines a candidate path path_SD which passes through S-A-C-E-D. The accumulated link propagation delay of the current candidate path is: 20 us+10 us+10 us+10 us=50 us. A difference between the delay demand quantity of the target service flow and the accumulated link propagation delay is determined as the budget value of total residence delay (total_residence_budget) of each candidate node in the candidate path, which is 200 us -50 us=150 us. Assuming that according to a mean budget method, each candidate node will share a budget value of residence delay of 150/5=30 us.

It should be noted that the mean budget method may be used to divide the total residence delay budget value (total_residence_budget) by the number of all candidate nodes in the candidate path (denoted as node_count), to obtain an average budget value of residence delay, namely: averaged_node_residence_budget= total_residence_budget/node_count. Then, averaged_node_residence_budget is used as the budget value of residence delay for each node (i.e., node_residence_budget). It is also possible to specify corresponding budget value of residence delay for each candidate node according to actual needs. For example, a node residence delay specified budget list is configured in advance. By reading the node residence delay specified budget list, it is determined that a specified budget of residence delay of the head node H is node_h_residence_specified_budget, which is used as the budget value of residence delay for the node H; a specified budget of residence delay of an intermediate node I is node_i_residence_specified_budget, which is used as the budget value of residence delay for the node I; and a specified budget of residence delay of the tail node E is node_e_residence_specified_budget, which is used as the budget value of residence delay for the node E. In addition, total_residence_budget = node_h_residence_specified_budget + node_i_residence_specified_budget + node_e_residence_specified_budget is met.

At step 1032b, for each candidate node in the candidate path, a target timeslot resource is reserved for the target service flow according to timeslot resource information of an egress port of the candidate node and a budget value of residence delay of the candidate node, and an evaluated value residence delay of the candidate node is determined.

Illustration is made in conjunction with specific examples. As shown in FIG. 6, in a direction of the candidate path from the head node S to the tail node D, the timeslot resource is reserved for the target service flow on the egress port of each candidate node in sequence. For each candidate node, a target timeslot is reserved for the target service flow according to the timeslot resource information of the egress port of the candidate node and the budget value of residence delay of the candidate node determined from the above step, and the evaluated value of residence delay corresponding to the candidate node is determined.

In the process of reserving the target timeslot for the target service flow, an embodiment of the present application provides an automatically-adjustable resource reservation method based on a delay budget. In the direction from a head node to a tail node in a candidate path, an outgoing timeslot resource is reserved on an egress port of each node in sequence according to a budget adjustment value of residence delay (node_residence_budget_adjustment) of the current node, so that the evaluated value of residence delay corresponding to the reserved outgoing timeslot is equal to or nearly equal to the budget adjustment value of residence delay (node_residence_budget_adjustment) of the current node. That is, in step 1032b, reserving the target timeslot resource for the target service flow according to the timeslot resource information of the egress port of the candidate node and the budget value of residence delay of the candidate nodes, and determining the evaluated value of residence delay of the candidate node include that: a deviation of residence delay of the candidate node is determined according to an evaluated value of accumulated residence delay and a budget value of accumulated residence delay of all upstream nodes corresponding to the candidate node; a budget adjustment value of residence delay of the candidate node is determined based on the deviation of residence delay and the budge value of residence delay budget of the candidate nodes; an offset of the target timeslot reserved by the candidate node for the target service flow relative to an ongoing sending timeslot of the egress port is determined based on the timeslot resource information of the egress port of the candidate node and the budget adjustment value of residence delay, wherein the ongoing sending timeslot is used for representing a timeslot, which is currently in a sending state at a target moment, on the egress port of the candidate node; in a case where the candidate node is a head node, the target moment is a moment when the target service flow arrives at the egress port of the candidate node; or, in a case where the candidate node is an intermediate node, the target moment is a moment when the end of a target timeslot reserved on an egress port of a target upstream node arrives at the egress port of the candidate node, the target upstream node being adjacent to the candidate node; and the evaluated value of residence delay of the candidate node is determined based on the offset.

In an implementation, when timeslot resource is reserved on the egress port of the head node H, an accumulated deviation of residence delay of the node(accumulated_node_residence_deviation) is an initial value 0. Therefore, the budget adjustment value of residence delay (node_residence_budget_adjustment) of the head node H is equal to the budget value of residence delay (node_residence_budget).

When the timeslot resource is reserved on the egress port of any node, if the evaluated value of residence delay corresponding to the reserved outgoing timeslot is equal to a budget adjustment value of intra-node residence delay (node_residence_budget_adjustment), an accumulated deviation of intra-node residence delay (accumulated_node_residence_deviation) for the next node in the path is 0, and the budget adjustment value of residence delay (node_residence_budget_adjustment) of the next node equals to the budget value of residence delay (node_residence_budget) of its own. Under normal circumstances, if the candidate node can reserve the expected timeslot according to its budget value of residence delay, there is no difference between the evaluated value of residence delay and the budget value of residence delay of the candidate node. However, in some cases, due to there is no sufficient resource in the expected timeslot, it is necessary to reserve resources in a certain timeslot near the expected timeslot, which can lead to a difference between the evaluated value of residence delay and the budget value of residence delay of the candidate node.

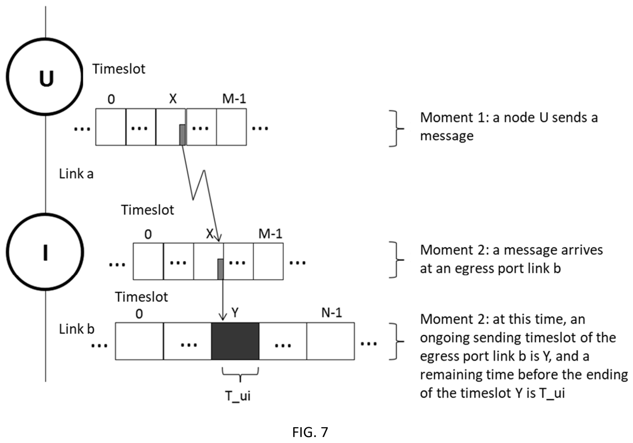

In an implementation, for a candidate node I, there is a fixed phase difference between a timeslot of the candidate node I and a timeslot of an adjacent upstream node thereof. The embodiment of the present application adopts an existing method to determine a relationship of mapping any outgoing timeslot of the upstream node to an ongoing sending timeslot of the egress port of the node I, especially when timeslot intervals between the two adjacent nodes are not the same. Assuming that the candidate node I has established a mapping relationship as shown in FIG. 7, as shown in the figure, the upstream node U (such as the head node H or other candidate nodes) of the candidate node I sends a packet in any outgoing timeslot X of an egress port (link a), after a period of link propagation delay (d_p) and an intra-node forwarding delay (d_f), the end of the timeslot X arrives at an egress port (link b) of the candidate node I not later than timeslot Y. That is, the outgoing timeslot X of the egress port (link a) of the upstream node is mapped to the ongoing sending timeslot Y of the egress port (link b) of the node I, and the remaining time before ending of the timeslot Y is T_ui.

Thus, assuming that a certain outgoing timeslot is reserved for a certain reserving subtask on the egress port of the upstream node, the ongoing sending timeslot of the egress port of the node I to which the outgoing timeslot is mapped is numbered j, the remaining time before the ending of the ongoing sending timeslot is t_remaining, and the reserved outgoing timeslot is offset by x ($\geq$1) timeslots after the timeslot j, that is, the sequence number of the outgoing timeslot is (j+x)%N, where N is the timeslot count contained in the orchestration period, and % is a remainder operator. Then, the evaluated value of residence delay of the candidate node is determined based on the offset x. The evaluated value of residence delay is determined in the following way: a first timeslot interval corresponding to the target upstream node and a second timeslot interval corresponding to the candidate node are acquired, the target upstream node being a node adjacent to the candidate node among the upstream nodes; an evaluated value of queuing delay on the egress port of the candidate node is determined based on the offset, the first timeslot interval and the second timeslot interval; a remaining time from the target moment to the ending of the ongoing sending timeslot of the candidate node is determined; and a sum of the evaluated value of queuing delays, an intra-node forwarding delay of the candidate node, and the remaining time is determined as the evaluated value of residence delay of the candidate nodes.

The evaluated value of queuing delay comprises a best evaluated value of queuing delay, a worst evaluated value of queuing delay, and an average evaluated value of queuing delay, and determining the evaluated value of queuing delay on the egress port of the candidate node based on the offset, the first timeslot interval and the second timeslot intervals includes that one of the best evaluated value of queuing delay, the worst evaluated value of queuing delay and the evaluated value of average queuing delay is selected as the evaluated value of queuing delay on the egress port of the candidate node according to a preset strategy.

In some cases, the best evaluated value of queuing delay $T_{best}$ may be determined according to the following formula:

$$T_{best}=(O-1)*T_v.$$

Or, the worst evaluated value of queuing delay $T_{worst}$ is determined according to the following formula:

$$T_{worst}=T_u+O*T_v.$$

Or, the average evaluated value of queuing delay $T_{ave}$ is determined according to the following formula:

$$T_{ave}=(T_u+(2*O-1)*T_v)/2.$$

Where, O is the offset, $T_u$ is the first timeslot interval corresponding to the target upstream node, and $T_v$ is the second timeslot intervals corresponding to the candidate nodes. It should be noted that for the head node, the first timeslot interval corresponding to the target upstream node adjacent to the head node is 0.

The best evaluated value of queuing delay, or the worst evaluated value queuing delay, or the average evaluated value of queuing delay mentioned above is selected to be used to determine the evaluated value of residence delay of the candidate node. The evaluated value of residence delay is compared with the budget adjustment value of intra-node residence delay (node_residence_budget_adjustment), so that when an appropriate x is selected, the two are equal or nearly equal, and idle bit amount resource of the corresponding outgoing timeslot (j+x)%N meets the burst volume (or sub burst volume) requirements corresponding to the reserving subtask. Finally, the sequence number of the outgoing timeslot reserved on the egress port of the intermediate node I for the reserving subtask and the bit amount occupied by the reserving subtask within the timeslot are maintained.

In some possible implementations, after determining the evaluated value of residence delay of the candidate node based on the offset, the method further includes that: a target timeslot reserved by the candidate node for the target service flow in the orchestration periods is determined based on the offset; and in a case where an idle timeslot resource of the determined target timeslot is not lower than timeslot resource required by the target service flow, and a difference between the budget value of residence delay and the evaluated value of residence delay which is determined according to the offset is less than a first threshold, it is determined that the timeslot resource is successfully reserved for the target service flow on the egress port of the candidate node.

In some possible implementation, after determining the evaluated value of residence delay of the candidate node based on the offset, the sequence number of the outgoing timeslot reserved on the egress port of the candidate node I for the reserving subtask and the bit amount occupied by the reserving subtask within the timeslot are further maintained. In some cases, a first mapping relationship between a target timeslot reserved on the egress port of the target upstream node and a target timeslot reserved on the egress port of the candidate node is generated; and the target service flow sent by the target upstream node is received, and the target timeslot reserved for the target service flow on the egress port is determined based on the first mapping relationship.

In some cases, in a case where the candidate node is the head node, the timeslot reserving subtask corresponding to the target service flow is received; the ongoing sending timeslot of the candidate nodes is determined based on a position mapping relationship of an arrival moment of the timeslot reserving subtask within the orchestration period of the head node and an intranode forwarding delay corresponding to the candidate node; and based on timeslot resource information of the egress port of the head node and the budget value of residence delay of the head node as well as the ongoing sending timeslot, the offset of the target timeslot reserved by the candidate node for the target service flow relative to the ongoing sending timeslot of the egress port is determined, where the target timeslot corresponds to the target timeslot resource.

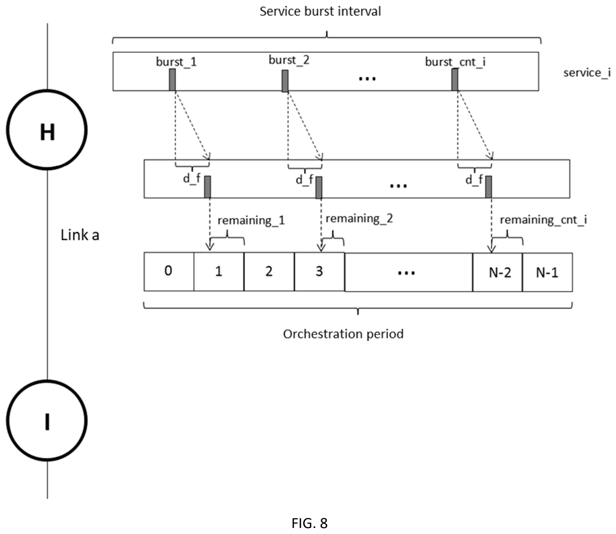

In an implementation, on the head node H, there is a fixed offset relationship between the orchestration period and traffic arrival moment of a burst volume (or sub burst volume) corresponding to a specific reserving subtask. That is, the traffic arrival moment will fall within a fixed ongoing sending timeslot. FIG. 8 shows a schematic diagram of an offset relationship between a burst volume (or sub burst volume) of a service and an orchestration period provided by embodiments of the present application. As shown in the figure, the first burst volume (burst_1) of service_i arrives at the head node H, and arrives at the egress port link-a after a period of intranode forwarding delay (denoted as d_f), the ongoing sending timeslot at this time is timeslot 1, and there is still remaining_1 left before the ending of timeslot 1. The last burst volume (burst_cnt_i) of service_i arrives at the head node H, and arrives at the egress port link-a after a period of intra-node forwarding delay (denoted as d_f), the ongoing sending timeslot at this time is timeslot N-2, and there is still remaining_cnt_i left before the ending of timeslot N-2.

Generally, for a certain reserving subtask, assuming that the ongoing sending timeslot to which the burst volume (or sub burst volume) corresponding to the certain reserved subtask is mapped is numbered j, the remaining time before the ending of the ongoing sending timeslot is t_remaining, and the reserved outgoing timeslot is offset by x ($\geq$1) timeslots after the timeslot j, that is, the sequence number of the outgoing timeslot is (j+x)%N, where N is the timeslot count contained in the orchestration period, and % is a remainder operator.

The best evaluated value of queuing delay, or the worst evaluated value of queuing delay, or the average evaluated value of queuing delay mentioned above is selected to be used to determine the evaluated value of residence delay of the head node. The evaluated value of residence delay is compared with the budget adjustment value of intra-node residence delay (node_residence_budget_adjustment), so that when an appropriate offset x is selected, the two are equal or nearly equal, and the corresponding outgoing timeslot j+x meets the burst volume (or sub burst volume) requirements corresponding to the reserving subtask. Finally, the sequence number of the outgoing timeslot reserved on the egress port of the head node H of the reserved subtask and the bit amount occupied by the reserved subtask within the timeslot are maintained.

In some possible implementations, after selecting the candidate path satisfying the first condition as the target path for the target service flow, the method further includes that: a second mapping relationship between the timeslot reserving subtask and the target path, a third mapping relationship between the timeslot reserving subtask and a target timeslot of the egress port of the head node, and a fourth mapping relationship between the timeslot reserving subtask and a timeslot list composed of target timeslots of egress ports of all the candidate nodes in the target path are generated; and a traffic corresponding to the timeslot reserving subtask of the target service flow is received, and a target timeslot of the traffic corresponding to the timeslot reserving subtask on the egress port of each candidate node in the target path is determined based on the second mapping relationship, the third mapping relationship, and the fourth mapping relationship.

In an implementation, the outgoing timeslot resources (i.e., target timeslots) reserved on the egress ports of all the nodes in the target path can be informed to the head node H during the reservation process, so that the head node H can generate a list containing all the outgoing timeslots above, and the timeslot list will be recorded in a status of the maintained reserving subtask.

At step 1032c, the evaluated value of total residence delay of the target service flow on the candidate path is determined based on the evaluated value of residence delay corresponding to each candidate node in the candidate path.

A sum of the evaluated values of residence delay corresponding to the various candidate nodes in the candidate path may be determined as the evaluated value of total residence delay on the candidate path.

Under normal circumstances, for a path path_HE carrying a deterministic service flow, the service flow needs to be further forwarded from the egress port of the tail node E to a service side, which also faces the problem of queuing and waiting. However, such egress port facing the service side does not belong to part of path_HE. That is, for path_HE, the timeslot resource cannot be reserved on the egress port. Therefore, if the egress port facing the service side needs to support timeslot-based packet scheduling further, the timeslot resource should be reserved on a higher-level service path (overlay path) using a method similar to the method provided in the embodiments of the present application. At this time, path_HE will serve as a virtual link of the overlay path to provide deterministic delay indicators. Therefore, for path_HE, the residence delay on the tail node E is only contributed by the intra-node forwarding delay, but does not include a queuing delay facing the service side. That is, reserving the target timeslot resource for the target service flow according to the timeslot resource information of the egress port of the candidate node and the budget value of residence delay of the candidate node, and determining the evaluated value of residence delay of the candidate node include that: in a case where the candidate node is a tail node, the intra-node forwarding delay corresponding to the tail node is determined as the evaluated value of residence delay of the tail node without reserving a timeslot resource for the target service flow on an egress port of the tail node.

In some possible implementations, in S104, the sum of the evaluated value of total residence delay and the accumulated link propagation delay of the selected candidate path satisfying the delay demand quantity includes that: the sum of the evaluated value of total residence delay of the selected candidate path and the accumulated link propagation delay of the selected candidate path being equal to the delay demand quantity; or a difference between the delay demand quantity and the sum of the evaluated value of total residence delay of the selected candidate path and the accumulated link propagation delay is less than a second threshold.

Through the above steps, the evaluated value of total residence delay of the target service flow on the candidate path is determined, and the sum of the evaluated value of total residence delay and the accumulated link propagation delay is compared with the delay demand quantity. When the sum is equal or close to the delay demand quantity of the target service flow, and the timeslot resource is successfully reserved for the target service flow on the egress ports of the all the candidate nodes, the candidate path meets the delay demand of the target service flow and is determined as the target path of the target service flow.

In practical applications, firstly, when the head node H receives a data packet of a specific service flow, the state of the maintained reserving subtask of the service flow is queried according to characteristic words and arrival moment of the service flow, the packet is matched to the corresponding reserving subtask of the corresponding service flow, and the outgoing timeslot saved in the state of the reserving subtask is encapsulated for the packet (according to local strategies, it may select to encapsulate a single outgoing timeslot reserved on the egress port of the node H, or select to encapsulate an outgoing timeslot list corresponding to the entire path).

Secondly, when the intermediate node I receives a data packet encapsulated with timeslot information, a mapping table entry of the outgoing timeslot of the maintained upstream node mapped to the outgoing timeslot of the current node is queried and matched for packets encapsulated with a single timeslot. The mapped outgoing timeslot is obtained from the table entry and updated to the timeslot encapsulated in the packet. Then, the corresponding timeslot resources of the egress port are accessed, and the packet is forwarded to downstream node. For packets encapsulated with a timeslot list, the next outgoing timeslot is directly obtained from the list, then the corresponding timeslot resources of the egress port are accessed, and the packet is forwarded to downstream nodes.

In conjunction with the network structure in FIG. 6, the above steps are explained as follows.

Assuming that all nodes in the network are the same in the timeslot interval, namely 10 us, and the orchestration period is equivalent to a scheduling period, each orchestration period containing 100 timeslots. In addition, it is assumed that the fixed forwarding delay within each node is 10 us.

It is assumed that the arrival moment of the burst volume is mapped to the ongoing sending timeslot 11 of the head node S, and there is t_11 = 6 us left before the ending of the timeslot 11. Assuming that the average evaluated value of queuing delay is used to determine the evaluated value of residence delay corresponding to the head node S, the evaluated value of residence delay is compared with the budget adjustment value intra-node residence delay (30+0=30 us), an outgoing timeslot 13 will be reserved on the egress port of the node S, and thus the offset O of the timeslot is equal to 13-11=2, and the timeslot interval of the head node is 10. According to the above calculation formula for the average evaluated value of queuing delay, the average evaluated value of queuing delay is obtained by $T_{ave} = (0+(2*2-1)*10)/2=15$. Furthermore, the sum of the intra-node forwarding delay, the remaining time, and the average evaluated value of queuing delay, all corresponding to the head node, is determined as the evaluated value of residence delay corresponding to the head node, which is 10+6+15=31 us. At this time, the accumulated deviation of residence delay is 30-31=-1 us.

It is assumed that the tail end of the outgoing timeslot 13 of the node S is mapped to the ongoing sending timeslot 70 of the node A, and there is t_70 = 3 us left before the ending of the timeslot 70. Assuming that the average evaluated value of queuing delay is used to determine the evaluated value of residence delay of the node A, the evaluated value of residence delay is compared with the budget adjustment value of intra-node residence delay (30-1=29 us), an outgoing timeslot 71 will be reserved on the egress port of the node A, and the obtained evaluated value of residence delay of the node A is 10+3+10=23 us. At this time, the accumulated deviation of residence delay is 29-23=6 us.

It is assumed that the tail end of the outgoing timeslot 71 of the node A is mapped to the ongoing sending timeslot 40 of the node C, and there is t_40 = 5 us left before the ending of the timeslot 40. Assuming that the average evaluated value of queuing delay is used to determine the evaluated value of residence delay of the node C, the evaluated value of residence delay is compared with the budget adjustment value of intra-node residence delay (30+6=36 us), an outgoing timeslot 42 will be reserved on the egress port of the node C, and the obtained evaluated value of residence delay of the node C is 10+5+20=35 us. At this time, the accumulated deviation of residence delay is 36-35=1 us.

It is assumed that the tail end of the outgoing timeslot 42 of the node C is mapped to the ongoing sending timeslot 90 of the node E, and there is t_90 = 1 us left before the ending of the timeslot 90. Assuming that the average evaluated value of queuing delay is used to determine the evaluated value of residence delay of the node E, the evaluated value of residence delay is compared with the budget adjustment value of intra-node residence delay (30+1=31 us), an outgoing timeslot 92 will be reserved on the egress port of the node E, and the obtained evaluated value of residence delay of the node E is 10+1+20=31 us. At this time, the accumulated deviation of residence delay is 31-31=0.

On the tail D, the evaluated value of residence delay is the intra-node forwarding delay 10 us, and is compared with the budget adjustment value of intra-node residence delay (30+0=30 us) to obtain the accumulated deviation of residence delay by 30-10=20 us. That is, after allocating the timeslot resource for the reserving subtask, the accumulated evaluated value of residence delay is 20 us less than the total budget of residence delay. Assuming that the difference does not exceed the preset threshold, path_SD will take effect as the target path for the reserving subtask 1.

After the target path takes effect, a timeslot list <13, 71, 42, 92> may be maintained for the reserving subtask 1 on the head node S. On each node, a mapping relationship table entry of the outgoing timeslot of the upstream node mapped to the outgoing timeslot of the current node can be created. For example, 13->71 is created on the node A, 71->42 is created on the node C, and 42->92 is created on the node E. When the head node S receives a service flow that matches the reserving subtask 1, according to the local strategy, it may select to encapsulate the above timeslot list <13, 71, 42, 92> for the packet, or select to encapsulate the single outgoing timeslot 13.

Through this method, the possibility of network congestion can be reduced, and quantitative guidance can be provided for determining the target path that meets specific delay requirements in the network, which is beneficial for improving the throughput of the entire communication network.

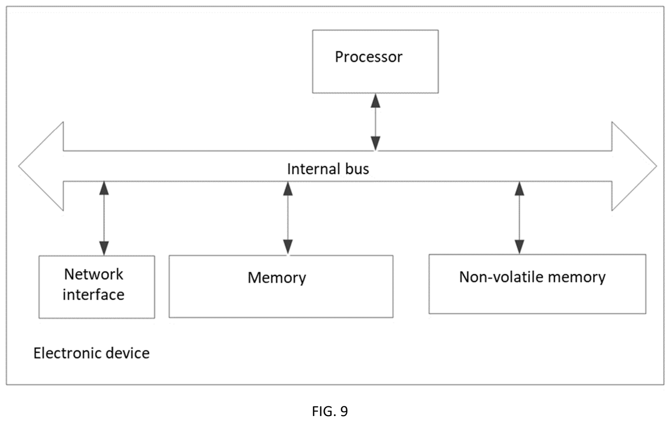

FIG. 9 shows a schematic structural diagram of hardware of an electronic device provided by an embodiment of the present application. Referring to the figure, at the hardware level, the electronic device includes a processor, optionally an internal bus, a network interface, and a memory. The memory may include an internal memory such as a high-speed random-access memory (RAM), or a non-volatile memory such as at least one disk memory. Certainly, the computer device may also include other hardware required for services.

The processor, the network interface, and the memory may be interconnected by the internal bus, which may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, only one bi-directional arrow is shown in the figure, but it does not indicate only one bus or one type of bus.

The memory is configured to store a program. Specifically, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form an apparatus for locating a target user at a logical level. The processor executes the program stored in the memory, specifically performs the method disclosed in the embodiments shown in FIG. 1 to FIG. 8 and achieves the functions and beneficial effects of various methods described in the foregoing method embodiments, which will not be repeated here.

The above method disclosed in the embodiments shown in FIG. 1 to FIG. 8 of the present application may be applied to the processor or implemented by the processor. The processor may be an integrated circuit chip having signal processing capabilities. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The various methods, steps, and logic block diagrams disclosed in the embodiments of the present application may be implemented or performed. The general-purpose processor may be a microprocessor, or the processor may also be any conventional processor, etc. The steps of the method disclosed in conjunction with the embodiments of the present application may be directly embodied to be executed and completed by a hardware decoding processor, or may be executed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory and completes the steps of the above method in combination with hardware thereof.

The computer device can also perform the methods described in the foregoing method embodiments, and achieve the functions and beneficial effects of the methods described in the foregoing method embodiments, and will not be repeated here.

In addition to the software implementations, the electronic device of the present application does not exclude other implementations, such as logic devices or combinations of software and hardware, that is, an execution body of the following process flows is not limited to each logic unit, but may be hardware or logic devices.

An embodiment of the present application further proposes a computer-readable storage medium. The computer-readable storage medium stores one or more programs. The one or more programs, when executed by an electronic device including a plurality of applications, cause the electronic device to perform the methods disclosed in the embodiments shown in FIG. 1 to FIG. 8 and to achieve the functions and beneficial effects of the methods described in the foregoing method embodiments, which will not be repeated here.

The computer-readable storage medium includes: a read-only memory (ROM), a random access memory (RAM), a magnetic disk or an optical disk, etc.

Further, an embodiment of the present application further provides a computer program product. The computer program product includes a computer program stored on a non-transitory computer-readable storage medium, the computer program includes program instructions, and the program instructions, when executed by a computer, implement the following flow: the methods disclosed in the embodiments shown in FIG. 1 to FIG. 8, and achieve the functions and beneficial effects of the methods described in the foregoing method embodiments, which will not be repeated here.

In total, the above is merely preferred embodiments of the present application and is not intended to limit the protection scope of the present application. Any modification, equivalent replacement, improvement and the like made within the spirit and principle of the present application shall all be contained in the scope of protection of the present application.

The system, apparatus, module or unit illustrated in the above embodiments may be specifically embodied by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. The information may be computer-readable instructions, data structures, modules of programs, or other data. Examples of the storage medium for a computer include, but are not limited to, a phase change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a read-only compact disk read-only memory (CD-ROM), a digital versatile disc (DVD) or other optical storage, a magnetic tape cartridge, a magnetic disk storage or other magnetic storage devices, or any other non transmission medium that can store information accessible by the computing device. According to the definition herein, the computer-readable medium does not include transitory media, such as modulated data signals and carriers.

It should further be noted that, the terms "include", "comprise" or any other variants thereof are intended to cover non-exclusive inclusion, so that a process, method, article or apparatus including a series of elements not only includes those elements, but also includes other elements not clearly listed, or also includes elements inherent to this process, method, article or apparatus. Without further restrictions, the elements defined by the sentence "including a..." do not exclude that there are other same elements in the process, method, article or device including the elements.

The various embodiments in this specification are described in a progressive manner, and the same or similar parts between the various embodiments can be referred to each other. Each embodiment focuses on contents different from other embodiments. In particular, as for the system embodiments, as they are basically similar to the method embodiment, the description is relatively simple. As for related parts, please refer to part of the description in the method embodiments.

## Claims

1. A service flow path determination method, comprising:

   acquiring a delay demand quantity of a target service flow and timeslot resource information of each egress port of each node;
   determining, on the basis of the timeslot resource information of each egress port of each node, at least one candidate path corresponding to the target service flow;
   reserving a timeslot resource for the target service flow on egress ports of candidate nodes in each candidate path, and determining an evaluated value of total residence delay of the target service flow on the candidate path; and
   selecting a candidate path satisfying a first condition as a target path for the target service flow, wherein the first condition comprises that timeslot resource is successfully reserved for the target service flow on egress ports of all candidate nodes of a selected candidate path, and a sum of an evaluated value of total residence delay of the selected candidate path and an accumulated link propagation delay of the selected candidate path satisfies the delay demand quantity.

2. The method according to claim 1, wherein reserving the timeslot resource for the target service flow on the egress ports of the candidate nodes in each candidate path comprises:

   determining an orchestration period for the candidate nodes in each candidate path;
   determining a timeslot reserving subtask based on a number of timeslots reserved for the target service flow in the orchestration period of the candidate nodes, wherein a traffic corresponding to each timeslot reserving subtask belongs to the target service flow; and
   reserving, for each timeslot reserving subtask, the timeslot resource for the target service flow on the egress ports of candidate nodes.

3. The method according to claim 2, wherein determining the orchestration period for the candidate nodes in each candidate path comprises:

   acquiring preset service burst intervals corresponding to a plurality of service flows; and
   determining, based on a least common multiple of the service burst intervals corresponding to the plurality of service flows, the orchestration period for the candidate nodes in each candidate path.

4. The method according to claim 2, wherein determining the timeslot reserving subtask based on the number of timeslots reserved for the target service flow in the orchestration period of the candidate nodes comprises:

   determining the number of timeslots reserved for the target service flow in the orchestration period based on both a first number of service burst intervals of the target service flow in the orchestration period and a second number of discrete burst volumes within each service burst interval; and
   determining the timeslot reserving subtask based on the number of timeslots reserved for the target service flow in the orchestration period.

5. The method according to claim 4, wherein determining the number of timeslots reserved for the target service flow in the orchestration period based on both the first number of service burst intervals of the target service flow in the orchestration period and the second number of discrete burst volumes within each service burst interval comprises:

   determining, based on timeslot resource information of egress ports of all the candidate nodes in the candidate path, a third number of timeslots reserved for each discrete burst volume within the service burst interval in the orchestration period; and
   determining the number of timeslots reserved for the target service flow in the orchestration period based on the first number of service burst intervals of the target service flow in the orchestration period, the second number of discrete burst volumes within each service burst interval, and the third number of timeslots reserved for each discrete burst volume in the orchestration period.

6. The method according to claim 5, wherein determining, based on the timeslot resource information of the egress ports of all the candidate nodes in the candidate path, the third number of timeslots reserved for each discrete burst volume within the service burst interval in the orchestration period comprises:

   determining, based on the timeslot resource information of the egress ports of all the candidate nodes in the candidate path, initial resource information corresponding to a single timeslot of the candidate node in the orchestration period; and

in a case where a proportion of a discrete burst volume within the service burst interval to the initial resource information corresponding to the single timeslot in the orchestration period is not higher than a preset value, determining that the discrete burst volume corresponds to one reserved timeslot; or

in a case where a proportion of a discrete burst volume within the service burst interval to the initial resource information corresponding to the single timeslot in the orchestration period is higher than the preset value, splitting the discrete burst volume into a plurality of sub burst volumes according to a preset rule, each sub burst volume corresponding to one reserved timeslot, wherein according to the preset rule, each sub burst volume at least comprises one complete packet, and a proportion of each sub burst volume to the initial resource information corresponding to the single timeslot in the orchestration period is not higher than the preset value.

7. The method according to claim 2, wherein reserving the timeslot resource for the target service flow on the egress ports of the candidate nodes in each candidate path, and determining the evaluated value of total residence delay of the target service flow on the candidate path comprises:

determining, based on the delay demand quantity and an accumulated link propagation delay of the candidate path, a budget value of residence delay for each candidate node in the candidate path;

reserving, for each candidate node of the candidate path, a target timeslot for the target service flow according to timeslot resource information of an egress port of the candidate node and a budget value of residence delay of the candidate node, and determining an evaluated value of residence delay of the candidate node; and

determining the evaluated value of total residence delay of the target service flow on the candidate path based on evaluated values of residence delay of all the candidate nodes in the candidate path.

8. The method according to claim 7, wherein reserving the target timeslot for the target service flow according to the timeslot resource information of the egress port of the candidate node and the budget value of residence delay of the candidate node, and determining the evaluated value of residence delay of the candidate node comprises:

determining a deviation of residence delay of the candidate node according to both an evaluated value of accumulated residence delay of all upstream nodes corresponding to the candidate node and a budget value of accumulated residence delay of all the upstream nodes;

determining a budget adjustment value of residence delay of the candidate node based on both the deviation of residence delay of the candidate node and the budget value of residence delay of the candidate node;

determining, based on the timeslot resource information of the egress port of the candidate node and the budget adjustment value of residence delay of the candidate node, an offset of the target timeslot reserved by the candidate node for the target service flow relative to an ongoing sending timeslot on the egress port of the candidate node, wherein the ongoing sending timeslot is used for representing a timeslot, which is in a sending state at a target moment, on the egress port of the candidate node; in a case where the candidate node is a head node, the target moment is a moment when the target service flow arrives at the egress port of the candidate node; or, in a case where the candidate node is an intermediate node, the target moment is a moment when an end of a target timeslot reserved on an egress port of a target upstream node arrives at the egress port of the candidate node, the target upstream node being adjacent to the candidate node; and

determining the evaluated value of residence delay of the candidate node based on the offset.

9. The method according to claim 8, wherein determining the evaluated value of residence delay of the candidate node based on the offset comprises:

acquiring a first timeslot interval corresponding to the target upstream node and a second timeslot interval corresponding to the candidate node, wherein the target upstream node is a node adjacent to the candidate node among the upstream nodes;

determining an evaluated value of queuing delay on the egress port of the candidate node based on the offset, the first timeslot interval and the second timeslot intervals;

determining remaining time from the target moment to an end of the ongoing sending timeslot of the candidate node; and

determining a sum of the evaluated value of queuing delay, an intra-node forwarding delay of the candidate node and the remaining time as the evaluated value of residence delay of the candidate node.

10. The method according to claim 9, wherein the evaluated value of queuing delay comprises a best evaluated value of queuing delay, a worst evaluated value of queuing delay, and an average evaluated value of queuing delay, and determining the evaluated value of queuing delay on the egress port of the candidate node based on the offset, the first timeslot interval and the second timeslot intervals comprises: selecting one of the best evaluated value of queuing delay, the worst evaluated value of queuing delay and the evaluated value of average queuing delay as the evaluated value of queuing delay on the egress port of the candidate node according to a preset strategy.

11. The method according to claim 10, wherein the best evaluated value $T_{best}$ of queuing delay is determined according to the following formula:

$$T_{best}=(O-1)*T_v;$$

or, the worst evaluated value $T_{worst}$ of queuing delay is determined according to the following formula:

$$T_{worst}=T_u+O*T_v;$$

or, the average evaluated value $T_{ave}$ of queuing delay is determined according to the following formula:

$$T_{ave}=(T_u+(2*O-1)*T_v)/2;$$

wherein, O is the offset, $T_u$ is the first timeslot interval corresponding to the target upstream node, and $T_v$ is the second timeslot interval corresponding to the candidate node.

12. The method according to claim 8, wherein after determining the evaluated value of residence delay of the candidate node based on the offset, the method further comprises:

   determining, based on the offset, a target timeslot reserved by the candidate node for the target service flow in the orchestration period; and
   in a case where an idle timeslot resource of the determined target timeslot is not lower than timeslot resource required by the target service flow, and a difference between the budget value of residence delay and the evaluated value of residence delay which is determined according to the offset is less than a first threshold, determining that timeslot resource is successfully reserved for the target service flow on the egress port of the candidate node.

13. The method according to claim 8, wherein after determining the evaluated value of residence delay of the candidate node based on the offset, the method further comprises:

   generating a first mapping relationship between a target timeslot reserved on the egress port of the target upstream node and a target timeslot reserved on the egress port of the candidate node; and
   receiving the target service flow from the target upstream node, and determining, based on the first mapping relationship, a target timeslot reserved for the target service flow on the egress port.

14. The method according to claim 8, wherein determining, based on the timeslot resource information of the egress port of the candidate node and the budget adjustment value of residence delay of the candidate node, the offset of the target timeslot reserved by the candidate node for the target service flow relative to the ongoing sending timeslot on the egress port comprises:

   in a case where the candidate node is a head node, receiving a timeslot reserving subtask corresponding to the target service flow;
   determining the ongoing sending timeslot of the candidate node based on both a position mapping relationship of an arrival moment of the timeslot reserving subtask within the orchestration period of the head node, and an intra-node forwarding delay corresponding to the candidate node; and
   determining, based on timeslot resource information of an egress port of the head node, a budget adjustment value of residence delay of the head node and the ongoing sending timeslot, the offset of the target timeslot, corresponding to the target timeslot resource, reserved by the candidate node for the target service flow relative to the ongoing sending timeslot of the egress port.

15. The method according to claim 14, wherein after selecting the candidate path satisfying the first condition as the target path for the target service flow, the method further comprises:

   generating a second mapping relationship between the timeslot reserving subtask and the target path, a third mapping relationship between the timeslot reserving subtask and a target timeslot of the egress port of the head node, and a fourth mapping relationship between the timeslot reserving subtask and a timeslot list composed of target timeslots of egress ports of all candidate nodes in the target path; and receiving a traffic corresponding to the timeslot reserving subtask of the target service flow, and determining a target timeslot of the traffic corresponding to the timeslot reserving subtask on the egress port of each candidate node in the target path based on the second mapping relationship, the third mapping relationship, and the fourth mapping relationship.

16. The method according to claim 7, wherein reserving the target timeslot resource for the target service flow according to the timeslot resource information of the egress port of the candidate node and the budget value of residence delay the candidate node, and determining the evaluated value of residence delay of the candidate node comprises:
in a case where the candidate node is a tail node, determining an intra-node forwarding delay corresponding to the tail node as the evaluated value of residence delay of the candidate node without reserving a timeslot resource for the target service flow on an egress port of the tail node.

17. The method according to claim 1, wherein the sum of the evaluated value of total residence delay of the selected candidate path and the accumulated link propagation delay of the selected candidate path satisfying the delay demand quantity comprises:

the sum of the evaluated value of total residence delay of the selected candidate path and the accumulated link propagation delay of the selected candidate path being equal to the delay demand quantity; or
a difference between the delay demand quantity and the sum of the evaluated value of total residence delay of the selected candidate path and the accumulated link propagation delay is less than a second threshold.

18. The method according to claim 1, wherein acquiring the timeslot resource information of each egress port of each node comprises:
notifying timeslot resource information of one or more timeslots of each egress port to each node by extending a network protocol, wherein the timeslot resource information comprises a sequence number corresponding to the timeslot, a timeslot interval, initial resource information, occupied resource information, and idle resource information.

19. An electronic device, comprising a processor and a memory, wherein the memory stores a program or instruction able to run on the processor, and the program or the instruction, when executed by the processor, implements the steps of the method according to any one of claims 1 to 18.

20. A readable storage medium, having a program or instruction stored thereon, wherein the program or the instruction, when executed by a processor, implements the steps of the method according to any one of claims 1 to 18.

100

S101

Acquire a delay demand quantity of a target service flow and timeslot resource information of each egress port of each node

S102

Determine at least one candidate path corresponding to the target service flow on the basis of the timeslot resource information of each egress port of each node

S103

Reserve a timeslot resource for the target service flow on egress ports of candidate nodes in each candidate path, and determine a total residence delay evaluated value of the target service flow on the candidate path

S104

Select a candidate path satisfying a first condition as a target path for the target service flow

FIG. 1

```
# N-1 :        timeslot_interval: ti_N
               bits_quota:
                   initial_amount_N
                   unused_amount_N

                        ... ...

# 2:           timeslot_interval: ti_3
               bits_quota:
                   initial_amount_3
                   unused_amount_3

# 1:           timeslot_interval: ti_2
               bits_quota:
                   initial_amount_2
                   unused_amount_2

# 0:           timeslot_interval: ti_1
               bits_quota:
                   initial_amount_1
                   unused_amount_1
```

Link

FIG. 2

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|    Type       |     Length    |            Reserved           |
+-+-+-+-+-+-+-+-+-+-+-+-+-+-+-+-+-+-+-+-+-+-+-+-+-+-+-+-+-+-+-+-+
|      Timeslot Count           |       Timeslot Interval       |
+-+-+-+-+-+-+-+-+-+-+-+-+-+-+-+-+-+-+-+-+-+-+-+-+-+-+-+-+-+-+-+-+
|      Sequence Number          |
+-+-+-+-+-+-+-+-+-+-+-+-+-+-+-+-+-+-+-+-+-+-+-+-+-+-+-+-+-+-+-+-+
|                        Initial Amount                         |
+-+-+-+-+-+-+-+-+-+-+-+-+-+-+-+-+-+-+-+-+-+-+-+-+-+-+-+-+-+-+-+-+
|                        Unused Amount                          |
+-+-+-+-+-+-+-+-+-+-+-+-+-+-+-+-+-+-+-+-+-+-+-+-+-+-+-+-+-+-+-+-+
//                                                             //
//                        ... ...                              //
//                                                             //
+-+-+-+-+-+-+-+-+-+-+-+-+-+-+-+-+-+-+-+-+-+-+-+-+-+-+-+-+-+-+-+-+
|      Sequence Number          |
+-+-+-+-+-+-+-+-+-+-+-+-+-+-+-+-+-+-+-+-+-+-+-+-+-+-+-+-+-+-+-+-+
|                        Initial Amount                         |
+-+-+-+-+-+-+-+-+-+-+-+-+-+-+-+-+-+-+-+-+-+-+-+-+-+-+-+-+-+-+-+-+
|                        Unused Amount                          |
+-+-+-+-+-+-+-+-+-+-+-+-+-+-+-+-+-+-+-+-+-+-+-+-+-+-+-+-+-+-+-+-+
```

FIG. 3

Orchestration period

| #0 | #1 | #2 | #3 | #4 | #5 | … … | #N-1 |

Reservation #2

service 1

Burst volume

Burst interval of service 1

Reservation #3    Reservation #4

service 2

Burst volume    Burst volume

Burst interval of service 2

Reservation #20    Reservation #21

service 3

Burst volume

Burst interval of service 3

Reservation #3    Reservation #17    Reservation #27

service 4

Burst volume    Burst volume    Burst volume

Burst interval of service 4

FIG. 4

20

FIG. 5

FIG. 6

U

Timeslot

0    X    M-1

Link a

Moment 1: a node U sends a message

Timeslot

0    X    M-1

I

Moment 2: a message arrives at an egress port link b

Timeslot

Link b    0    Y    N-1

T_ui

Moment 2: at this time, an ongoing sending timeslot of the egress port link b is Y, and a remaining time before the ending of the timeslot Y is T_ui

FIG. 7

FIG. 8

Processor

Internal bus

Network interface

Memory

Non-volatile memory

Electronic device

FIG. 9

## INTERNATIONAL SEARCH REPORT

| International application No. |
| --- |
| **PCT/CN2023/142041** |

| A. | CLASSIFICATION OF SUBJECT MATTER |
| --- | --- |

H04L 45/12(2022.01)i

According to International Patent Classification (IPC) or to both national classification and IPC

| B. | FIELDS SEARCHED |
| --- | --- |

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, WPABS, ENTXT, DWPI, VEN, CNABS, 3GPP: 业务流, 路径, 目标, 时延, 需求量, 节点, 出端口, 时隙资源, 候选路径, 总驻留, 评估, 估计, 条件, 目标路径, 候选, 链路, 传播时延, 时延需求, Traffic flow, path, target, latency, demand, node, egress port, slot resource, Candidate Path, Total Residence, Evaluation, Estimation, Condition, Target Path, Candidate, Link, Propagation Latency, Latency Demand

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113497754 A (HUAWEI TECHNOLOGIES CO., LTD.) 12 October 2021 (2021-10-12) description, paragraphs [0199]-[0309], figures 1-10, and claims 1-33 | 1-20 |
| A | CN 113438156 A (XIDIAN UNIVERSITY et al.) 24 September 2021 (2021-09-24) entire document | 1-20 |
| A | CN 113645149 A (PENG CHENG LABORATORY) 12 November 2021 (2021-11-12) entire document | 1-20 |
| A | CN 115442313 A (CHINA INFORMATION CONSULTING & DESIGNING INSTITUTE CO., LTD. et al.) 06 December 2022 (2022-12-06) entire document | 1-20 |
| A | CN 115914128 A (SOUTHEAST UNIVERSITY et al.) 04 April 2023 (2023-04-04) entire document | 1-20 |
| A | US 2016277272 A1 (ARISTA NETWORKS, INC.) 22 September 2016 (2016-09-22) entire document | 1-20 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 March 2024** | **22 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/142041**

| Patent document cited in search report | | | Publication date (day/month/year) | Patent family member(s) | | | Publication date (day/month/year) |
|---|---|---|---|---|---|---|---|
| CN | 113497754 | A | 12 October 2021 | WO | 2021185043 | A1 | 23 September 2021 |
| | | | | EP | 4106274 | A1 | 21 December 2022 |
| | | | | US | 2023015960 | A1 | 19 January 2023 |
| | | | | CN | 116192726 | A | 30 May 2023 |
| CN | 113438156 | A | 24 September 2021 | None | | | |
| CN | 113645149 | A | 12 November 2021 | None | | | |
| CN | 115442313 | A | 06 December 2022 | None | | | |
| CN | 115914128 | A | 04 April 2023 | None | | | |
| US | 2016277272 | A1 | 22 September 2016 | US | 9847922 | B2 | 19 December 2017 |

Form PCT/ISA/210 (patent family annex) (July 2022)

**REFERENCES CITED IN THE DESCRIPTION**

**Patent documents cited in the description**

- CN 202310463598